# EUROPÄISCHE PATENTSCHRIFT

(11) **EP 1 963 113 B1**
(45) Veröffentlichungstag und Bekanntmachung des Hinweises auf die Patenterteilung: **06.01.2016**
(21) Anmeldenummer: 06807559.7
(22) Anmeldetag: 26.10.2006
(51) Int. Cl.: B60C 11/12, B60C 11/03

(54) **LAUFSTREIFENPROFIL MIT SINUSLAMELLEN**
TREAD PROFILE WITH SINUSOIDAL LAMELLAE
PROFIL DE BANDE DE ROULEMENT A LAMELLES SINUSOIDALES

(30) Priorität: 06.12.2005 DE 102005058365
(43) Veröffentlichungstag der Anmeldung: 03.09.2008
(73) Patentinhaber: Continental Reifen Deutschland GmbH, 30165 Hannover (DE)
(72) Erfinder: VENNEBÖRGER, Martin, 30625 Hannover (DE); DIENSTHUBER, Franz, 30559 Hannover (DE)
(74) Vertreter: Finger, Karsten
(86) Internationale Anmeldenummer: PCT/EP2006/067788
(87) Internationale Veröffentlichungsnummer: WO 2007/065760

(56) Entgegenhaltungen:
- EP-A- 1 529 662
- EP-A2- 1 529 659
- DE-A1- 3 540 669
- JP-A- 2006 213 285

## Beschreibung

Die Erfindung betrifft Laufstreifenprofil eines Fahrzeugluftreifens - insbesondere eines Winterreifens - mit Profilblockelementen, in denen sinusförmig gewellte Feineinschnitte ausgebildet sind.

Ein derartiges Laufstreifenprofil ist beispielsweise aus der DE10257487A1 bekannt. Der sinusförmige Feineinschnitt ermöglicht große Kantenlängen zur Verbesserung des Griffs auf Schnee und Eis bei hoher Steifigkeit des betroffenen Profilblockelements. Allerdings wird beim Öffnen des Feineinschnitts beim Durchlaufen des Latsches nur im Bereich der Maxima und Minima der Wellenform eine große Tasche zur Aufnahme von Schnee geschaffen, durch die die Schnee-Schneereibung zwischen aufgenommenem und nicht aufgenommenem Schnee ermöglicht. In den großen Erstreckungsbereichen, die sich zwischen den Maxima und Minima befinden, öffnet sich der Feineinschnitt nur in geringem Maße. Die Aufnahmemöglichkeit von Schnee im Feineinschnitt zur positiven Beeinflussung der Schnee-Schnee-Reibung wird hierdurch stark begrenzt.

Aus der DE 35 40 669 A1 ist ein Laufstreifenprofil eines Fahrzeugluftreifens mit Profilblockelementen bekannt, in denen wellenförmige Einschnitte ausgebildet sind, deren Amplituden vom freien Rand der Blöcke zum Blockzentrum hin allmählich größer werdend ausgebildet sind.

Der Erfindung liegt die Aufgabe zugrunde, mit einfachen Mitteln die Ausbildung eines Laufstreifenprofil eines Fahrzeugluftreifens zu ermöglichen, bei dem die Vorteile des sinusförmigen Feineinschnitte mit langen zusätzlichen Kanten bei hoher Steifigkeit des jeweiligen Profilblockelements mit einem verbesserten Griff auf weichem Untergrund mit geringem Reibungskoeffizienten verbunden werden können.

Die Erfindung wird durch die Ausbildung eines Laufstreifenprofils eines Fahrzeugluftreifens - insbesondere eines Winterreifens -mit Profilblockelementen, in denen sinusförmig gewellte Feineinschnitte ausgebildet sind, gemäß den Merkmalen von Anspruch 1 gelöst, bei dem der Feineinschnitt mit einem längs ihrer Haupterstreckungsrichtung progressiv zunehmenden Amplitudenverlauf der sinusförmigen Wellenform ausgebildet ist.

Die Aufgabe wird erfindungsgemäß auch durch die Ausgestaltung eines Laufstreifenprofils eines Fahrzeugluftreifens - insbesondere eines Winterreifens - mit Profilblockelementen, in denen sinusförmig gewellte Feineinschnitte ausgebildet sind, gemäß den Merkmalen von Anspruch 10 gelöst, mit einer Nulllinie der Wellenform, die sich längs der Haupterstreckungsrichtung der Welle erstreckt, wobei längs der Haupterstreckung zumindest in jedem zweiten - insbesondere in jedem - Nulldurchgang der Steigungswinkel α der Wellenkontur zur Nulllinie größer wird, wobei die Zunahme eine progressive Zunahme ist.

Der progressiv zunehmende Verlauf ermöglicht längs seiner progressiven Zunahme eine zunehmende Versteifung des Profilblockelements, die im Bereich seiner Maxima eine ausreichende Versteifung des jeweiligen Profilblockelements sicherstellt, und in einem relativ langen Bereich mit reduzierten Amplitude bzw. mit reduzierter Steigung im Nulldurchgang ein großes, vollständiges Öffnen des Feineinschnitts beim Durchlaufen des Latsches bis nahe an den Bereich mit den Maxima ermöglicht. Hierdurch wird über einen langen Erstreckungsbereich des sinusförmig gewellten Feineinschnitts die Bildung einer großen durchgängigen Tasche zur Aufnahme von weichem Untergrund - wie z.B. Schnee - ermöglicht. Die Griffeigenschaften des Profilblockelements und des Fahrzeugluftreifens werden hierdurch verbessert.

Besonders vorteilhaft ist die Ausbildung eines Laufstreifenprofils gemäß den Merkmalen von Anspruch 2, wobei der Feineinschnitt mit einem längs ihrer Haupterstreckungsrichtung in Richtung einer Profilblockkante mit progressiv zunehmendem Amplitudenverlauf der sinusförmigen Wellenform ausgebildet ist.. Da die Profilblockelemente am Blockrand keine Abstützung haben, sind die Blockelemente an dieser Stelle besonders weich. Eine Möglichkeit der verbesserten Abstützung ist die Reduzierung der Feineinschnittdicke am Blockrand, damit sich die Blockelemente beim Durchlaufen des Latsches dort gegenseitig abstützen können und die Gefahr des Kippens reduziert wird. Dadurch vergrößert sich die Steifigkeit der Blockelemente und somit können die Trockenbrems- und die Handlingeigenschaften verbessert werden. Die großen Flankenwinkel im progressiv angewachsenen Teil des Feineinschnitts haben ein geringeres Öffnen beim Durchlaufen des Latsches zur Folge.

Besonders vorteilhaft ist die Ausbildung eines Laufstreifenprofils gemäß den Merkmalen von Anspruch 3, wobei der Feineinschnitt ausgehend von einem Abschnitt mit einer Amplitude, deren Größe 0 ist, mit einem längs ihrer Haupterstreckungsrichtung progressiv zunehmenden Amplitudenverlauf der sinusförmigen Wellenform ausgebildet ist. Bei einer Amplitude des sinusförmigen Feineinschnitts, die gleich null ist, ist aufgrund der flachen Steigung im Nullliniendurchgang die Schneeaufnahme beim Durchlaufen des Latsches maximal, die Selbstabstützung in diesem Bereich der Profilblockelemente ist minimal. Wenn sich diese geringen Amplituden in der Profilblockelementmitte befinden, wird die Steifigkeit der Profilblockelemente kaum beeinflusst, so dass der Profilblock trotz hoher Schneeaufnahmekapazität über ausreichend Steifigkeit verfügt. Darüber hinaus kann die Sicherheit ausreichender Steifigkeit durch die zusätzliche Ausbildung nach Anspruch 2 gewährleistet werden.

Besonders vorteilhaft ist die Ausbildung eines Laufstreifenprofils gemäß den Merkmalen von Anspruch 4, wobei der Feineinschnitt mit einem längs ihrer Haupterstreckungsrichtung bis zu einem maximalen Amplitudenwert progressiv zunehmenden Amplitudenverlauf der sinusförmigen Wellenform ausgebildet ist.

Besonders vorteilhaft ist die Ausbildung eines Laufstreifenprofils gemäß den Merkmalen von Anspruch 5, wobei der Einschnitt in einem dem längs seiner Erstreckungrichtung mit progressiv zunehmendem Amplitudenverlauf der maximalen Amplitude anschließenden im wesentlichen geradlinigen Erstreckungsbereich eine das Profilblockelement seitlich begrenzende Flanke des Profilblockelements durchbricht. Hierdurch können Schwindestellen am Blockrand vermieden werden.

Besonders vorteilhaft ist die Ausbildung eines Laufstreifenprofils gemäß den Merkmalen von Anspruch 6, wobei die Erstreckungslänge des dem längs seiner Erstreckungsrichtung mit progressiv zunehmendem Amplitudenverlauf der maximalen Amplitude anschließenden im wesentlichen geradlinigen Erstreckungsbereich 3 bis 5 mm groß ist. Hierdurch können besonders sicher Schwindestellen am Blockrand vermieden werden.

Besonders vorteilhaft ist die Ausbildung eines Laufstreifenprofils gemäß den Merkmalen von Anspruch 7, wobei in einer Zone des Profilblockelements, die sich zwischen den das Profilblockelement seitlich begrenzenden Profilblockflanken und über einen Abstand von 3mm - insbesondere bis zu 5mm - zu den Profilblockflanken erstreckt, keine oder nur ungewellt ausgebildete Erstreckungsbereiche von Feineinschnitten ausgebildet sind.. Hierdurch können Schwindestellen am Blockrand besonders zuverlässig vermieden werden.

Besonders vorteilhaft ist die Ausbildung eines Laufstreifenprofils gemäß den Merkmalen von Anspruch 8, mit Profilblockelementen, in denen wenigstens zwei sinusförmig gewellte Feineinschnitte ausgebildet sind, wobei die beiden Feineinschnitte jeweils mit einem längs ihrer Haupterstreckungsrichtung progressiv zunehmenden Amplitudenverlauf der sinusförmigen Wellenform ausgebildet ist, wobei die Erstreckungsrichtung der progressiven Zunahme der Amplitudenverläufe bei den beiden Feineinschnitten gegenläufig zueinander ausgebildet ist.. Hierdurch sind gleichmäßige Verteilungen der durch die Feineinschnitte bewirkten Eigenschaften über ein gesamtes Profilblockelement einfach einstellbar.

Besonders vorteilhaft ist die Ausbildung eines Laufstreifenprofils gemäß den Merkmalen von Anspruch 9, wobei der Feineinschnitt mit einem längs seiner Haupterstreckungsrichtung progressiv zunehmenden Amplitudenverlauf der sinusförmigen Wellenform und längs in Richtung zunehmender Amplitude zusätzlich mit zunehmender Frequenz der Wellenform ausgebildet ist.. Hierdurch können die Versteifungseffekte zusätzlich verstärkt werden.

Die Erfindung wird im Folgenden an Hand der in den Figuren 1 bis 3 dargestellten Ausführungsbeispiele näher erläutert. Hierin zeigen
- Fig. 1: Laufstreifenprofil eines Fahrzeugluftreifens,
- Fig. 2: Querschnittsdarstellung des Fahrzeugluftreifens von Fig. 1 in einer die Drehachse des Fahrzeugluftreifens beinhaltenden Schnittebene gemäß Schnitt II-II von Fig. 1,
- Fig.3a: Profilblockelement des Laufstreifenprofils von Fig. 1 in vergrößerter Darstellung zur Erläuterung des sinusförmigen Feineinschnitts mit progressiv zunehmender Amplitude bei geschlossenem Feineinschnitt,
- Fig.3b: ausschnittsweises Profilblockelement von Fig. 3 zur Erläuterung des sinusförmigen Feineinschnitts mit progressiv zunehmender Amplitude bei geöffnetem Feineinschnitt. in weiter vergrößerter Darstellung.

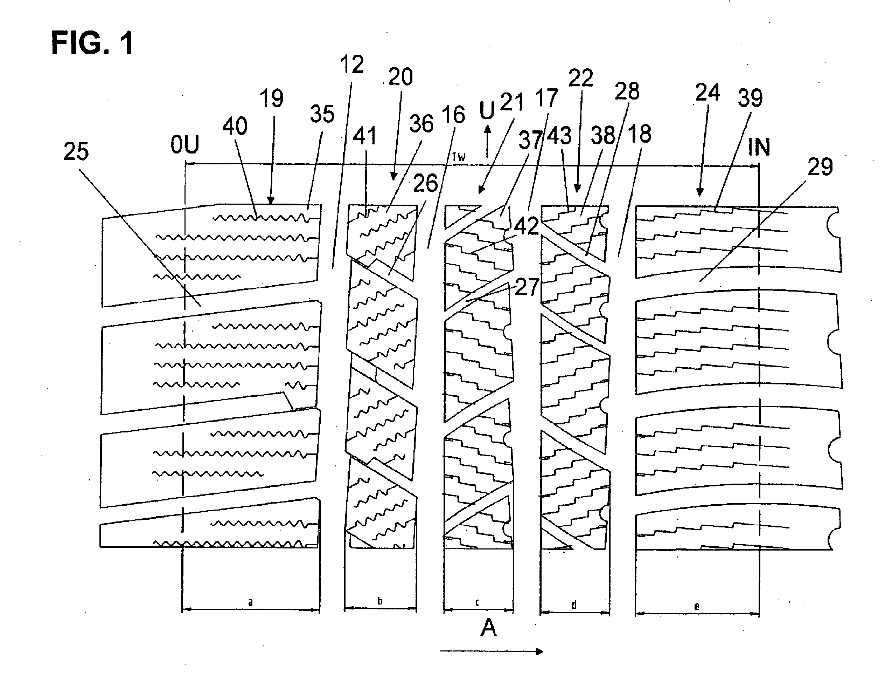

In Fig. 1 ist der Aufbau eines Fahrzeugluftreifens beispielhaft dargestellt, bei dem um einen Kern 2 mit Kernprofil 4 eine erste Karkassenlage 8 bekannter Art außerhalb einer luftundurchlässigen Innenschicht 6 über den rechten Schulterbereich und die Zenitebene zu dem linken Schulterbereich und den linken Kern 2 mit Kernprofil 4 reicht, um den sie in herkömmlicher Weise gelegt ist. Über der ersten Karkassenlage 8 ist in herkömmlicher Weise eine zweite Karkassenlage 9 bekannter Art gelegt, die sich ebenfalls von der in Fig.1 rechts dargestellten Seite des Reifens bis zur links dargestellten Seite erstreckt. In herkömmlicher Weise ist im Kernbereich jeweils über einen Wulststreifen 23 und den Wulstverstärker 3 ein Hornprofil 5 und von diesem ausgehend bis in den Schulterbereich reichend ein Seitenwandstreifen 7 aufgelegt. Über den Umfang des Reifens reichen außerhalb der Karkassenlagen 7 und 8 radialer Bauart angeordnet mehrere Stahlgürtellagen 11 und 13 bekannter Art mit in Kautschuk eingebetteten Stahlkorden. Im Schulterstreifen sind in bekannter Weise zusätzlich Schulterstreifen 10 aufgelegt. Den Abschluss des Reifenaufbaus bildet in bekannter Weise ein profilierter Laufstreifen 1.

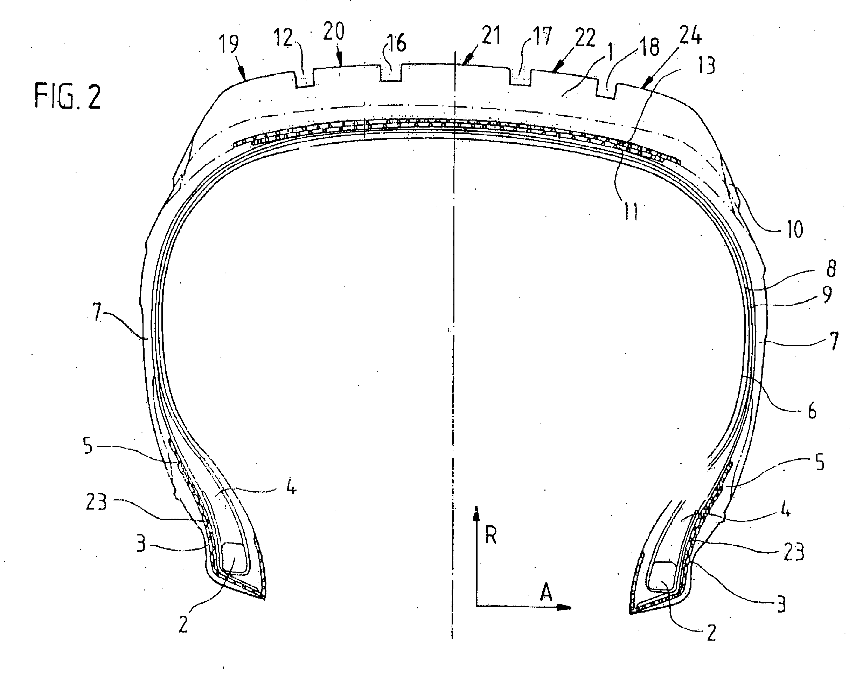

In den Figuren 1 und 2 ist die axiale Richtung A des Fahrzeugluftreifens mit Pfeildarstellung eingetragen. Die radiale Richtung R des Fahrzeugluftreifens ist ebenfalls mit Pfeildarstellung angegeben, wobei die Pfeilrichtung von radial innen nach radial außen weist. Ebenso ist die Umfangsrichtung U des Fahrzeugluftreifens mit Pfeildarstellung angegeben. Ebenso ist in Fig. 1 die Aufstandsbreite TW eingezeichnet, die der Fahrzeugluftreifen im montierten, belasteten Betriebszustand unter Normbedingungen nach E.T.R.T.O-Standards aufweist

In den Figuren 1 und 2 ist zu erkennen, dass der Laufstreifen 1 mit einem asymmetrischen Winterreifenprofil ausgebildet ist, welches in axialer Richtung A ausgehend von der linken zur Fahrzeugaußenseite OU weisenden Reifenschulter bis zur rechten zur Fahrzeuginnenseite IN weisenden Reifenschulter hintereinander angeordnet mit einer in Umfangsrichtung U ausgerichteten Profilblockreihe 19, die in den linken Schulterbereich OU reicht, mit einer in Umfangsrichtung U ausgerichteten Profilblockreihe 20, mit einer zentralen in Umfangsrichtung U ausgerichteten Profilblockreihe 21, mit einer in Umfangsrichtung U ausgerichteten Profilblockreihe 22 und mit einer in Umfangsrichtung U ausgerichteten Profilblockreihe 24, die in den rechten Schulterbereich IN reicht, ausgebildet ist. Die Profilblockreihe 19 ist aus einer Vielzahl von in Umfangsrichtung U des Reifens hintereinander angeordneten Profilblockelementen 35 bekannter Art ausgebildet, die jeweils durch eine Querrille 25 bekannter Art voneinander getrennt sind. Die Profilblockreihe 20 ist aus einer Vielzahl von in Umfangsrichtung U des Reifens hintereinander angeordneten Profilblockelementen 36 bekannter Art ausgebildet, die jeweils voneinander durch eine Querrille 26 bekannter Art getrennt sind. Die Profilblockreihe 21 ist aus einer Vielzahl von in Umfangsrichtung U hintereinander angeordneten Profilblockelementen 37 bekannter Art ausgebildet, die jeweils voneinander durch eine Querrille 27 bekannter Art getrennt sind. Die Profilblockreihe 22 ist von einer Vielzahl von in Umfangsrichtung U hintereinander angeordneten Profilblockelementen 38 bekannter Art ausgebildet, die jeweils voneinander durch eine Querrille 28 bekannter Art getrennt sind. Die Profilblockreihe 24 ist aus einer Vielzahl von in Umfangsrichtung U hintereinander angeordneten Profilblockelementen 39 bekannter Art ausgebildet, die jeweils durch eine Querrille 29 bekannter Art voneinander getrennt sind.

Die Profilblockreihen 19 und 20 sind in axialer Richtung A des Fahrzeugluftreifens durch eine in Umfangsrichtung U verlaufende Umfangsrille 12 bekannter Art, die sich über den gesamten Umfang des Reifens erstreckt, voneinander getrennt. Die Profilblockreihen 20 und 21 sind in axialer Richtung durch eine in Umfangsrichtung U verlaufende Umfangsrille 16 bekannter Art, die sich über den gesamten Umfang des Reifens erstreckt, voneinander getrennt. Die Profilblockreihen 21 und 22 sind in axialer Richtung A des Reifens durch eine in Umfangsrichtung U des Reifens verlaufende und über den gesamten Umfang des Reifens erstreckte Umfangsrille 17 bekannter Art voneinander getrennt. Die Profilblockreihe 22 und die Profilblockreihe 24 sind in axialer Richtung A durch eine in Umfangsrichtung U des Reifens verlaufende und über den gesamten Umfang des Reifens erstreckte Umfangsrille 18 bekannter Art von einander getrennt.

In den Profilblockelementen 35 der Schulterprofilblockreihe 19 sind parallel zu einander erstreckt Querrillen 25 sinusförmig gewellte Feineinschnitte 40 ausgebildet. In den Profilblockelementen 36 der Profilblockreihe 20 sind parallel zu einander erstreckt sinusförmig gewellte Feineinschnitte 41 ausgebildet. In den Profilblockelementen 37 der Profilblockreihe 21 sind parallel zu einander erstreckte stufenförmig verlaufende Feineinschnitte 42 ausgebildet, die sich über die gesamte axiale Erstreckung der Profilblockelemente 37 erstrecken. In den Profilblockelementen 38 der Profilblockreihe 22 sind in den Profilblockelementen 38 parallel zu einander erstreckte stufenförmig verlaufende Feineinschnitte 43 ausgebildet, die sich über die gesamte axiale Erstreckung der Profilblockelemente 38 erstrecken. In den Profilblockelementen 39 der Schulterprofilblockreihe 24 sind parallel zu den Querrillen 29 erstreckte stufenförmig verlaufende Feineinschnitte 44 ausgebildet, die sich über die gesamte axiale Erstreckung der Profilblockelemente 39 innerhalb der Aufstandsbreite TW des Fahrzeugluftreifens erstrecken.

Die Profilblockreihe 19 erstreckt sich in axialer Richtung - zwischen dem zur Fahzeugaußenseite OU weisenden Rand der Aufstandsbreite TW und der Umfangsrille 12 über eine maximale Breite a. Die Profilblockreihe 20 erstreckt sich in axialer Richtung - zwischen der Umfangsrille 12 und der Umfangsrille 16 über eine maximale Breite b. Die Profilblockreihe 21 erstreckt sich in axialer Richtung - zwischen der Umfangsrille 16 und der Umfangsrille 17 über eine maximale Breite c. Die Profilblockreihe 22 erstreckt sich in axialer Richtung - zwischen der Umfangsrille 17 und der Umfangsrille 18 über eine maximale Breite d. Die Profilblockreihe 24 erstreckt sich in axialer Richtung - zwischen dem zur Fahzeuginnenseite IN weisenden Rand der Aufstandsbreite TW und der Umfangsrille 18 über eine maximale Breite e.

Für die Breiten a, b, c, d und e gelten folgende Verhältnisse:
0,22*TW ≤ a ≤ 0,25*TW, 0,11*TW ≤ b ≤ 0,15*TW, 0,1*TW ≤ c ≤ 0,14*TW,
0,11*TW ≤ d ≤ 0,15*TW, 0,18*TW ≤ e ≤ 0,25*TW.

Die Profilblockreihe 19 ist mit einer ersten durchschnittlichen Umfangssteifigkeit W1 ausgebildet. Die Profilblockreihe 20 ist mit einer durchschnittlichen Umfangssteifigkeit W2 ausgebildet. Die Profilblockreihe W3 ist mit einer durchschnittlichen Umfangssteifigkeit W3 ausgebildet. Die Profilblockreihe 22 ist mit einer durchschnittlichen Umfangssteifigkeit W4 ausgebildet. Die Profilblockreihe 24 ist mit einer durchschnittlichen Umfangssteifigkeit W5 ausgebildet.

Für die Umfangssteifigkeiten W1, W2, W3, W4 und W5 gilt:
W1>W2>W3<W4<W5.

Bei einem asymmetrischen Laufstreifenprofil gilt:
(0,7 *W1) ≤ W2 ≤ (0,8 *W1),
(0,6 *W1) ≤ W3 ≤ (0,7 *W1),
(0,65 *W1) ≤ W4 ≤ (0,75 *W1) und
(0,85 *W1) ≤ W5 ≤ (0,95 *W1).

Beispielsweise sind die Umfangssteifigkeiten wie folgt gewählt: W2 = 0,75W1, W3=0,65W1, W4=0,7W1, W5=0,9W1.

Die Umfangssteifigkeiten werden durch Formgebung der Profilblockelemente, die Ausbildung der Querrillen und Feineinschnitt sowie durch die Wahl der für die Profilblockreihe beabsichtigten Gummimischung in bekannter Weise gezielt eingestellt.

Ein Weg zur Bestimmung der durchschnittlichen Umfangssteifigkeiten der Profilblockreihen ist beispielsweise in der Tagung des VDI zum Thema "Reifen- Fahrwerk - Fahrbahn" vom 25.10.05 und dem hierzu veröffentlichten Tagungsprotokoll (ISBN-Nr. 3-18-091912-4): VDI-Berichte 1912, S.227ff. unter dem Titel "Vorhersage von Reifeneigenschaften in der Profilentwicklung" (Vortragende: Dr. -Ing. W.Strache u.a.") dargestellt.

Auch bei einem laufrichtungsgebundenem Laufstreifenprofil gilt für die Umfangssteifigkeiten W1, W2, W3, W4 und W5 :
W1>W2>W3<W4<W5.

Dabei gelten folgende Beziehungen:
(0,7 *W1) ≤ W2 ≤ (0,8 *W1),
(0,6 *W1) ≤ W3 ≤ (0,7 *W1),
(0,7 *W1) ≤ W4 ≤ (0,8 *W1) und
(0,9 *W1) ≤ W5 ≤ (1,0 *W1).

Beispielsweise sind die Umfangssteifigkeiten wie folgt gewählt: W2 = 0,75W1, W3=0,65W1, W4=0,75W1, W5=1,0W1.

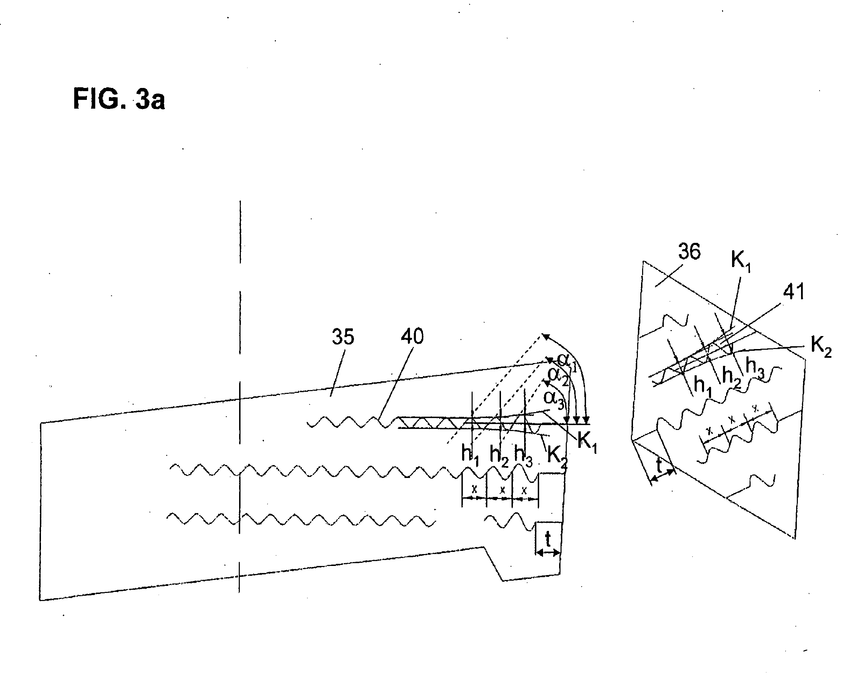

Fig. 3a zeigt jeweils ein Profilblockelement 35 und 36 der Profilblockreihe 19 bzw. 20 in stark vergrößerter Darstellung. Dabei ist zu erkennen, dass in den beiden Profilblockelementen 35 und 36 sinusförmig gewählte Feineinschnitte 40 bzw. 41 ausgebildet sind, die sich jeweils ausgehend von einem stumpfen Ende im Profilblock in Richtung Profilblockkante mit längs ihrer Erstreckungsrichtung progressiv zunehmenden Amplituden ihrer Wellenform ausgebildet sind. In beiden Profilblockelementen 35 und 36 ist jeweils an einem Feineinschnitt 40 bzw. 41 eine erste die Maxima der Wellenform berührende einhüllenden Kurve K₁ und eine zweite die Minima der Wellenform berührende einhüllenden Kurve K₂ dargestellt. Dabei ist deutlich erkennbar, dass längs der Erstreckungsrichtung des Feineinschnitts 40 bzw. 41 der Abstand der einhüllenden Kurven K₁ und K₂ zueinander progressiv steigend zunimmt. Bei drei aufeinander folgenden Schwingungsphasen mit der Wellenlänge x ist auch der Abstand der beiden Kurven K₁ und K₂ zueinander in den aufeinanderfolgenden Maxima mit h₁, h₂ und h₃ eingezeichnet. Es ist deutlich erkennbar, dass der bei den drei aufeinander folgenden Maxima eingezeichnete Abstand h₁, h₂ und h₃ progressiv zunimmt. Die Differenz (h₂ - h₁) ist kleiner der Differenz (h₃ - h₂).

In der Figur.3a ist auch zu erkennen, dass der Steigungswinkel α des Wellenverlaufs zur Nulllinie der Wellenform im Schnittpunkt mit der Nulllinie (Nulldurchgang) längs der Erstreckung des Feineinschnitts 40 bzw. 41 jeweils von Nulldurchgang zu Nulldurchgang progressiv zunehmend größer wird. Am Beispiel eines Feineinschnitts 40 ist jeweils im Abstand einer Schwingungsphase jeweils der Steigungswinkel α₁, α₂ und α₃ - und somit am Beispiel jedes zweiten Nulldurchgangs im Schnittpunkt der Wellenform mit der Nulllinie (Nulldurchgang) dargestellt. Dabei ist deutlich erkennbar, dass α₁ < α₂ < α₃, wobei für die Differenzen der Steigungswinkel gilt: (α₃ - α₂) >(α₂- α₁).

Im dargestellten Ausführungsbeispiel ist die Wellenlänge x konstant gewählt.

Längs der progressiv zunehmenden Amplitude erstreckt sich der wellenförmige Feineinschnitt 40 bzw. 41 jeweils bis in den Abstand t von einer das Profilblockelement zu einer Profilrille begrenzenden Profilblockflanke des Profilblockelements, um dann geradlinig bis zur Profilblockflanke erstreckt in die Profilrille zu münden. Der Abstand t ist so gewählt, dass für ihn gilt: 3mm ≤ t ≤ 5mm.

In einer besonderen Ausführungsform ist innerhalb der Aufstandsbreite TW der Lauffläche in jedem der Profilblockelemente zu allen das jeweilige Profilblockelement jeweils begrenzenden Profilrillen jeweils ein Randbereich, der sich über einen Abstand von t mit 3mm ≤ t ≤ 5mm erstreckt, frei von wellenförmigen Ausbildungen von Feineinschnitten gewählt..

Wie in Fig. 3a zu erkennen ist, sind am Beispiel des Profilblockelementes 36 mehrere in ihrem Erstreckungsverlauf parallel ausgebildete sinusförmige gewellte Feineinschnitte 41 ausgebildet, wobei jeweils zwei benachbarte Feineinschnitte 41 längs ihrer Erstreckung einen gegenläufigen progressiven Steigungsverlauf ihrer Amplituden bzw. aufweisen. Zwei derartige benachbarte Feineinschnitte 41 mit gegenläufig verlaufenden progressivem Steigungsverlauf ihrer Amplituden und ihres Steigungswinkels α im Nulldurchgang sind im Anschluss an ihrem wellenförmigen Verlauf jeweils in Erstreckungsrichtung des Feineinschnitts 41 an gegenüberliegende Profilblockkanten eines Profilblockelements und die durch diese begrenzten Rillen angebunden.

In der Fig. 3a sind Feineinschnitte 40 und 41 dargestellt mit einer längs ihrer Erstreckung konstanten Wellenlänge x.

In einer alternativen - nicht dargestellten - Ausführung sind die Feineinschnitte 40 bzw. 41 mit einem längs ihrer jeweiligen Haupterstreckungsrichtung progressiv zunehmenden Amplitudenverlauf der sinusförmigen Wellenform bzw. ihres Steigungswinkels α im Nulldurchgang und zusätzlich mit einer längs ihrer Erstreckungsrichtung in Richtung zunehmender Amplitude bzw. ihres Steigungswinkels α im Nulldurchgang mit zunehmender Frequenz der Wellenform ausgebildet.

In einem besonderen Ausführungsbeispiel ist dabei die Frequenz über die gesamte Erstreckung des Feineinschnitts 40 bzw. 41 mit einer Zunahme von 0 bis 10% ausgebildet.

Die Feineinschnitte 40 und 41 sind längs ihres sinusförmig gewellten Erstreckungsbereichs mit einer in radialer Richtung des Fahrzeugluftreifens gemessenen Tiefe von 8 bis 9 mm ausgebildet. Im geradlinigen Anbindungsbereich t zur Profilkante sind die Feineinschnitte 40 bzw. 41 mit einer in radialer Richtung des Fahrzeugluftreifens gemessenen Tiefe von beispielsweise 2mm ausgebildet.

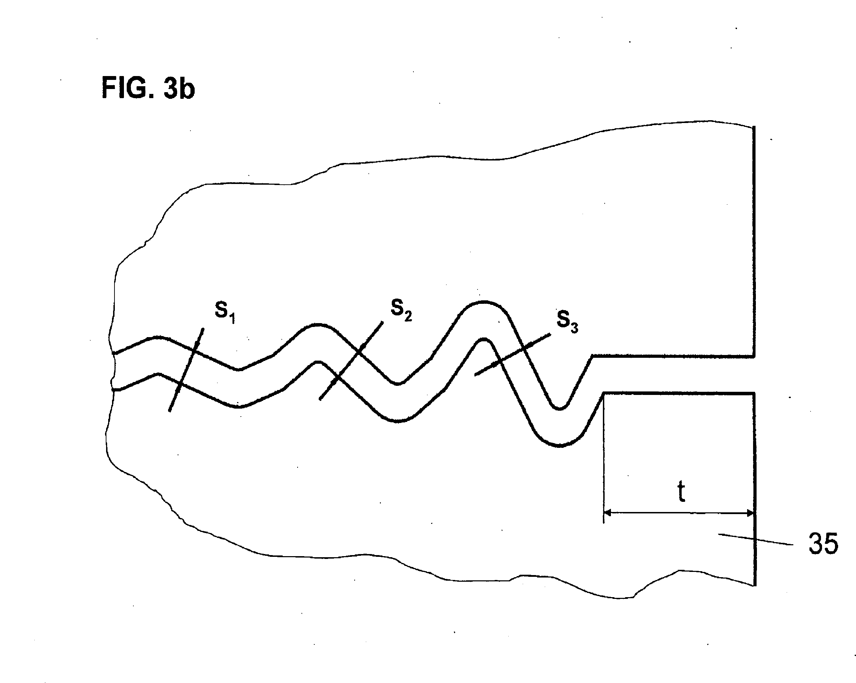

Die Feineinschnitte sind im unbelasteten Zustand der Fig. 3 mit einer Spaltbreite von 0,3 bis 1,0 mm, z..B. 0,5 mm ausgebildet

Fig. 3b zeigt in noch stärker vergrößerter Darstellung gegenüber der Darstellung von Fig. 3a am Beispiel eines ausschnittsweise dargestellten Feineinschnittts 40 des Profilblockelements 35 den Zustand des Feineinschnitts bei Durchlaufen des Latsches.

Dabei wird deutlich erkennbar, dass über einen langen Erstreckungsbereich des jeweiligen Feineinschnitts 40 bis in die Nähe der maximalen Amplitude bzw. der maximalen Steigung α im Nulldurchgang selbst im Bereich der Nulldurchgänge ein sehr deutlicher Öffnungsspalt S entsteht, der in Richtung der maximalen Amplitude bzw. des maximalen Steigungswinkels α im Nulldurchgang über die gesamte Erstreckung des Feineinschnitts langsam abnehmend geöffnet ist. Die Spaltbreite S₁,S₂,S₃ bzw. des maximalen Steigungswinkels α im Nulldurchgang in im Abstand einer Phasenlänge aufeinander folgenden Steigungsbereichen nimmt nimmt von Phase zu Phase ab. Im Bereich der größten Amplituden bzw. des maximalen Steigungswinkels α im Nulldurchgang ist aufgrund des steilen Flankenverlaufs der Wellen zwischen Minimum und Maximum bzw. von Maximum und Minimum am weitesten geschlossen.

In einer weiteren Ausbildungsform ist die Amplitudenhöhe bzw. die Steigung der Amplituden in den aufeinander folgenden Nulldurchgängen eines Feineinschnitts über einen ersten Erstreckungsbereich eines sinusförmig gewellten Feineinschnitts innerhalb eines Profilblockelementes zunächst konstant bleibt oder linear zunimmt und in einem anschließenden Erstreckungsbereich in Richtung der Profilblockkante progressiv ansteigt.

Die Einhüllende der Amplitude in einem s-y-Koordinatensystem, in dem die Koordinatenrichtung s die Haupterstreckungsrichtung des Feineinschnitts darstellt und in dem die Koordinatenrichtung y senkrecht zur Kooerdinatenrichtung s ausgebildet ist, entspricht im progressiv ansteigenden Erstreckungsbereich des Feineinschnitts einer Exponentionalfunktion der Form f(s) = p e^{(q s)}. Dabei ist ein Maximum der Einhüllenden gegeben bei einer Einhüllenden mit p = 1,8 und q = 0,08. Ein Minimum der Einhüllenden ist gegeben bei einer Einhüllenden mit p = 1,2 und q= 0,05

Beispielsweise ist eine Einhüllende gewählt mit p = 1,6 und mit q = 0,06

### Bezugszeichenliste

### (Teil der Beschreibung)

- 1: Laufstreifen
- 2: Kern
- 3: Wulstverstärker
- 4: Kernprofil
- 5: Hornprofil
- 6: Innenschicht
- 7: Seitenstreifen
- 8: Karkassenlage
- 9: Karkassenlage
- 10: Schulterstreifen
- 11: Gürtellage
- 12: Umfangsrille
- 13: Gürtellage
- 14:
- 15:
- 16: Umfangsrille
- 17: Umfangsrille
- 18: Umfangsrille
- 19: Profilblockreihe
- 20: Profilblockreihe
- 21: Profilblockreihe
- 22: Profilblockreihe
- 23: Wulststreifen
- 24: Profilblockreihe
- 25: Querrille
- 26: Querrille
- 27: Querrille
- 28: Querrille
- 29: Querrille
- 30:
- 31:
- 32:
- 33:
- 34:
- 35: Profilblockelement
- 36: Profilblockelement
- 37: Profilblockelement
- 38: Profilblockelement
- 39: Profilblockelement
- 40: Feineinschnitt
- 41: Feineinschnitt
- 42: Feineinschnitt
- 43: Feineinschnitt
- 44: Feineinschnitt

## Patentansprüche

1. Laufstreifenprofil eines Fahrzeugluftreifens - insbesondere eines Winterreifens - mit Profilblockelementen (35,36), in denen sinusförmig gewellte Feineinschnitte (40,41) ausgebildet sind,
**dadurch gekennzeichnet,**
**dass** der Feineinschnitt (40,41) mit einem längs ihrer Haupterstreckungsrichtung progressiv zunehmenden Amplitudenverlauf der sinusförmigen Wellenform ausgebildet ist.

2. Laufstreifenprofil gemäß den Merkmalen von Anspruch 1,
wobei der Feineinschnitt (40,41) mit einem längs ihrer Haupterstreckungsrichtung in Richtung einer Profilblockkante mit progressiv zunehmendem Amplitudenverlauf der sinusförmigen Wellenform ausgebildet ist.

3. Laufstreifenprofil gemäß den Merkmalen von einem oder mehreren der vorangegangenen Ansprüche,
wobei der Feineinschnitt (40,41) ausgehend von einem Abschnitt mit einer Amplitude, deren Größe 0 ist, mit einem längs ihrer Haupterstreckungsrichtung progressiv zunehmenden Amplitudenverlauf der sinusförmigen Wellenform ausgebildet ist.

4. Laufstreifenprofil gemäß den Merkmalen von einem oder mehreren der vorangegangenen Ansprüche,
wobei der Feineinschnitt (40,41) mit einem längs ihrer Haupterstreckungsrichtung bis zu einem maximalen Amplitudenwert progressiv zunehmenden Amplitudenverlauf der sinusförmigen Wellenform ausgebildet ist..

5. Laufstreifenprofil gemäß den Merkmalen von Anspruch 4,
wobei der Einschnitt (40,41) in einem dem längs seiner Erstreckungsrichtung mit progressiv zunehmendem Amplitudenverlauf der maximalen Amplitude anschließenden im wesentlichen geradlinigen Erstreckungsbereich eine das Profilblockelement (35,36) seitlich begrenzende Flanke des Profilblockelements (35,36) durchbricht.

6. Laufstreifenprofil gemäß den Merkmalen von Anspruch 4,
wobei die Erstreckungslänge des dem längs seiner Erstreckungsrichtung mit progressiv zunehmendem Amplitudenverlauf der maximalen Amplitude anschließenden im wesentlichen geradlinigen Erstreckungsbereich 3 bis 5 mm groß ist.

7. Laufstreifenprofil gemäß den Merkmalen von einem oder mehreren der vorangegangenen Ansprüche,
wobei in einer Zone des Profilblockelements (35,36), die sich zwischen den das Profilblockelement seitlich begrenzenden Profilblockflanken und über einen Abstand von 3mm - insbesondere bis zu 5mm - zu den Profilblockflanken erstreckt, keine oder nur ungewellt ausgebildete Erstreckungsbereiche von Feineinschnitten (40,41) ausgebildet sind.

8. Laufstreifenprofil gemäß den Merkmalen von einem oder mehreren der vorangegangenen Ansprüche,
mit Profilblockelementen, in denen wenigstens zwei sinusförmig gewellte Feineinschnitte (41) ausgebildet sind, wobei die beiden Feineinschnitte (41) jeweils mit einem längs ihrer Haupterstreckungsrichtung progressiv zunehmenden Amplitudenverlauf der sinusförmigen Wellenform ausgebildet ist,
wobei die Erstreckungsrichtung der progressiven Zunahme der Amplitudenverläufe bei den beiden Feineinschnitten (41) gegenläufig zueinander ausgebildet ist.

9. Laufstreifenprofil gemäß den Merkmalen von einem oder mehreren der vorangegangenen Ansprüche,
wobei der Feineinschnitt (40,41) mit einem längs seiner Haupterstreckungsrichtung progressiv zunehmenden Amplitudenverlauf der sinusförmigen Wellenform und längs in Richtung zunehmender Amplitude zusätzlich mit zunehmender Frequenz der Wellenform ausgebildet ist.

10. Laufstreifenprofil eines Fahrzeugluftreifens - insbesondere eines Winterreifens - mit Profilblockelementen (35,36), in denen sinusförmig gewellte Feineinschnitte (40,41) ausgebildet sind, mit einer Nulllinie der Wellenform, die sich längs der Haupterstreckungsrichtung der Welle erstreckt,
**dadurch gekennzeichnet,**
**dass** längs der Haupterstreckung zumindest in jedem zweiten - insbesondere in jedem - Nulldurchgang der Steigungswinkel α der Wellenkontur zur Nulllinie größer wird, wobei die Zunahme eine progressive Zunahme ist.

## Claims

1. Tread profile of a pneumatic vehicle tyre - in particular a winter tyre - with profile block elements (35, 36) in which sipes (40, 41) in the form of sinusoidal waves are formed, **characterized in that** the sipe (40, 41) is formed with an amplitude profile of the sinusoidal wave form which increases progressively along its main extension direction.

2. Tread profile according to the features of Claim 1, wherein the sipe (40, 41) is formed with an amplitude profile of the sinusoidal wave form which increases progressively along its main extension direction in the direction of a profile block edge.

3. Tread profile according to the features of one or more of the preceding claims, wherein, starting from a portion having an amplitude whose size is 0, the sipe (40, 41) is formed with an amplitude profile of the sinusoidal wave form which increases progressively along its main extension direction.

4. Tread profile according to the features of one or more of the preceding claims, wherein the sipe (40, 41) is formed with an amplitude profile of the sinusoidal wave form which increases progressively along its main extension direction up to a maximum amplitude value.

5. Tread profile according to the features of Claim 4, wherein the sipe (40, 41) breaches a flank of the profile block element (35, 36) that laterally delimits the profile block element (35, 36) in a substantially rectilinear extension region which follows the maximum amplitude along its extension direction with progressively increasing amplitude profile.

6. Tread profile according to the features of Claim 4, wherein the extension length of the substantially rectilinear extension region which follows the maximum amplitude along the sipe extension direction with progressively increasing amplitude profile is 3 to 5 mm.

7. Tread profile according to the features of one or more of the preceding claims, wherein no or only non-waved extension regions of the sipes (40, 41) are formed in a zone of the profile block element (35, 36) which extends between the profile block flanks which laterally delimit the profile block element and over a distance of 3 mm - in particular up to 5 mm - from the profile block flanks.

8. Tread profile according to the features of one or more of the preceding claims, comprising profile block elements in which at least two sipes (41) in the form of sinusoidal waves are formed, wherein the two sipes (41) are each formed with an amplitude profile of the sinusoidal wave form which increases progressively along their main extension direction, wherein the extension direction of the progressive increase of the amplitude profiles in the two sipes (41) is formed oppositely to one another.

9. Tread profile according to the features of one or more of the preceding claims, wherein the sipe (40, 41) is formed with an amplitude profile of the sinusoidal wave form which increases progressively along its main extension direction and, lengthwise in the direction of increasing amplitude, additionally with increasing frequency of the wave form.

10. Tread profile of a pneumatic vehicle tyre - in particular a winter tyre - with profile block elements (35, 36) in which sipes (40, 41) in the form of sinusoidal waves are formed, with a zero line of the wave form which extends along the main extension direction of the wave, **characterized in that** the angle of inclination α of the wave contour to the zero line becomes greater along the main extension at least in every second - in particular in every - zero crossing, wherein the increase is a progressive increase.

## Revendications

1. Profil de bande de roulement pour bandage pneumatique de roue de véhicule, en particulier bandage de roue pour hiver, présentant des éléments (35, 36) de blocs profilés dans lesquels de fines entailles (40, 41) en ondulations sinusoïdales sont formées, **caractérisé en ce que**
la fine entaille (40, 41) est configurée avec une forme ondulée sinusoïdale dont l'amplitude croît progressivement dans la direction de son extension principale.

2. Profil de bande de roulement selon les caractéristiques de la revendication 1, dans lequel la fine entaille (40, 41) est configurée avec une forme ondulée sinusoïdale dont l'amplitude augmente progressivement dans sa direction d'extension principale en direction d'un bord du bloc profilé.

3. Profil de bande de roulement selon les caractéristiques d'une ou plusieurs des revendications précédentes, dans lequel la fine entaille (40, 41) partant d'une partie d'amplitude de valeur 0 est configurée avec une forme ondulée sinusoïdale dont l'amplitude augmente progressivement le long de son extension principale.

4. Profil de bande de roulement selon les caractéristiques d'une ou plusieurs des revendications précédentes, dans lequel la fine entaille (40, 41) est configurée avec une forme ondulée sinusoïdale dont l'amplitude augmente progressivement dans sa direction d'extension principale jusqu'à une valeur maximale d'amplitude.

5. Profil de bande de roulement selon les caractéristiques de la revendication 4, dans lequel l'entaille (40, 41), dont l'amplitude croît progressivement jusqu'à l'amplitude maximale le long de la direction de son extension, traverse ensuite dans la partie essentiellement rectiligne de son extension un flanc de l'élément (35, 36) de bloc profilé qui délimite latéralement l'élément (35, 36) de bloc profilé.

6. Profil de bande de roulement selon les caractéristiques de la revendication 4, dans lequel la longueur de l'extension de l'amplitude qui croît progressivement dans la direction d'extension jusqu'à l'amplitude maximale pour se poursuivre dans une extension essentiellement rectiligne a une taille de 3 à 5 mm.

7. Profil de bande de roulement selon les caractéristiques d'une ou plusieurs des revendications précédentes, dans lequel aucune fine entaille (40, 41) n'est formée ou seules des fines entailles s'étendant sans ondulation dans une zone de l'élément (35, 36) de bloc profilé qui s'étend entre les flancs du bloc profilé qui délimitent latéralement le bloc profilé et sur une distance de 3 mm et en particulier de 5 mm vers les flancs du bloc profilé.

8. Profil de bande de roulement selon les caractéristiques d'une ou plusieurs des revendications précédentes, présentant des éléments de blocs profilés dans lesquels au moins deux fines entailles (41) ondulées de manière sinusoïdale sont formées, les deux fines entailles (41) présentant chacune une forme d'ondulation sinusoïdale dont l'amplitude augmente progressivement dans la direction de l'extension principale, la direction d'extension de l'augmentation progressive de l'amplitude des deux fines entailles (41) étant opposées l'une à l'autre.

9. Profil de bande de roulement selon les caractéristiques d'une ou plusieurs des revendications précédentes, dans lequel la fine entaille (40, 41) présentant une forme d'onde sinusoïdale dont l'amplitude augmente progressivement dans la direction de son extension principale présente de plus une forme ondulée dont la fréquence augmente dans la direction d'augmentation de l'amplitude.

10. Profil de bande de roulement pour bandage pneumatique de roue de véhicule, en particulier bandage de roue pour hiver, présentant des éléments (35, 36) de blocs profilés dans lesquels de fines entailles (40, 41) en ondulations sinusoïdales sont formées avec une ligne nulle de la forme ondulée qui s'étend dans la direction d'extension principale de l'ondulation, **caractérisé en ce que**
le long de l'extension principale, au moins sur un passage par zéro sur deux et en particulier dans chaque passage par zéro, l'angle de pente α du contour de l'ondulation par rapport à la ligne nulle augmente, l'augmentation étant une augmentation progressive.
